# EUROPEAN PATENT APPLICATION

(11) **EP 4 620 357 A1**
(43) Date of publication of application: **24.09.2025**
(21) Application number: 24165251.0
(22) Date of filing: 21.03.2024
(51) Int. Cl.: A47J 31/44, A47J 31/46, A47J 31/52

(54) **METHOD AND SYSTEM FOR OPERATING A KITCHEN LIQUID FROTHING DEVICE**

(71) Applicant: Versuni Holding B.V., 1082 MD Amsterdam (NL)
(72) Inventor: SINNEMA, Anke Gerda, 1082 MD Amsterdam (NL); BERENDS, Erik, 1082 MD Amsterdam (NL); HIEMSTRA, Hielke, 1082 MD Amsterdam (NL); D'ABUNDO, Giuseppe, 1082 MD Amsterdam (NL); PECCI, Andrea, 1082 MD Amsterdam (NL)
(74) Representative: Vollering, Stefanus Franciscus Maria

(57) **Abstract**

Provided is a system (27) for operating a steam delivery assembly (23) of a kitchen liquid frothing device, e.g. milk frother. The steam delivery assembly has a pump (12) and a heater (22) for heating water supplied thereto by the pump to provide steam for frothing a liquid. The system comprises a controller (28) configured to receive an input indicative of a target temperature of a frothed liquid to be produced by the kitchen liquid frothing device, and to control pump and/or valve operation(s) of the steam delivery assembly at least partly based on the input. Also provided is a kitchen liquid frothing device comprising the steam delivery assembly and the system. Additionally provided is a beverage machine (10), such as a coffee machine, comprising the kitchen liquid frothing device. Further provided is a method and related computer program for operating a steam delivery assembly of a kitchen liquid frothing device.

## Description

### FIELD OF THE INVENTION

The invention relates to a method, and a related computer program, for operating a steam delivery assembly of a kitchen liquid frothing device, e.g. milk frother, that provides steam for frothing a liquid.

The invention also relates to a system for operating a steam delivery assembly of such a kitchen liquid frothing device. The invention additionally concerns a kitchen liquid frothing device comprising the steam delivery assembly and such a system.

The invention further provides a beverage machine comprising the kitchen liquid frothing device.

### BACKGROUND OF THE INVENTION

Various kitchen liquid frothing devices are known that operate by drawing a liquid, e.g. milk, into a mixing chamber. The liquid drawn into the mixing chamber may then be mixed with one or more other fluids, e.g. air and/or steam.

This principle tends to be employed in milk frothers. Incorporating milk frothing functionality in beverage machines, e.g. coffee machines, is a growing and increasingly affordable trend. This is to the extent that such milk frothing functionality can sometimes even be considered a so-called "hygiene factor", in other words a basic requirement that the consumer expects a coffee machine to satisfy. Thus, at least some manufacturers will only offer a coffee machine for sale if the coffee machine has milk frothing functionality.

Commonly kitchen liquid frothing devices use steam to froth the liquid, e.g. milk. Such kitchen liquid frothing devices tend to include a steam channel that comprises a Venturi restriction. When the steam, e.g. steam jet, passes this restriction, a pressure drop may be generated directly downstream of the restriction. This pressure drop may be used to draw in liquid to be frothed, e.g. milk, and ambient air, with the liquid and air being subsequently entrained by the steam and mixed to form frothed liquid.

Use of steam to froth the liquid may have certain advantages, but may invariably cause some degree of heating of the liquid being frothed. Frothed liquid that has also been heated may be acceptable for inclusion in certain beverages, for example beverages prepared using heated water, such as hot coffee brewed at around 90°C. However, frothed liquid that has also been heated may be less desirable for other beverages, such as "cold brew" coffee, in other words coffee brewed at room temperature, and "brew over ice" or "iced" coffee, in which coffee is initially brewed at slightly lower temperatures than usual, e.g. 60 to 80°C instead of around 90°C, and then poured over ice to chill the coffee. It is noted that such coffee may be brewed slightly stronger than normal, to compensate for the inevitable dilution with water from melting of the ice.

In the case of, for example, "brew over ice" or "iced" coffee, it may be particularly desirable that the frothed liquid is less hot, so that when the frothed liquid, e.g. milk froth, is poured oved the ice, melting of the ice, and concomitant dilution of the beverage, may be slower.

One way of making colder frothed liquid may be to increase a diameter of a liquid suction duct or liquid inlet so that the liquid to be frothed can be drawn in at a higher flow rate. Due to the higher flow rate, the time during which heat is transferred from the steam to the liquid may be shorter, hence less heat may be transferred from the steam to the liquid, resulting in frothed liquid that is less hot.

A disadvantage of this solution is that different kitchen liquid frothing devices, or at least different liquid frothing parts, may be needed for producing frothed liquids having different temperatures relative to each other. For example, differently dimensioned liquid suction ducts, air inlets and/or Venturi geometry may be needed. Such parts may need to be interchanged by a user, depending, for example, on whether "normal" hot froth or colder froth is desired.

### SUMMARY OF THE INVENTION

It would be desirable to provide a physically simple way of operating a kitchen liquid frothing device, and in particular controlling temperature of the frothed liquid produced by the kitchen liquid frothing device, in which number of parts is kept to a minimum and/or ease of use is enhanced.

The invention is defined by the claims.

According to examples in accordance with an aspect of the invention, there is provided a method for operating a steam delivery assembly of a kitchen liquid frothing device, the steam delivery assembly having a pump, optionally one or more valves, and a heater for heating water supplied thereto by the pump to provide steam for frothing a liquid, the method comprising: receiving an input indicative of a target temperature of a frothed liquid to be produced by the kitchen liquid frothing device; and controlling pump and/or valve operation(s) of the steam delivery assembly, at least partly based on the input, to adjust the steam for frothing the liquid.

Control over a temperature of the frothed liquid produced by the kitchen liquid frothing device may thus be exerted by controlling the steam delivery assembly's pump and/or valve operation(s).

This may be because such operation(s) influence delivery and/or characteristic(s) of the steam, and such steam delivery and/or steam characteristic(s) may determine, at least in part, the extent to which the liquid is heated during frothing using the steam.

Since the pump, as well as valve(s), may be already included in the steam delivery assembly of the kitchen liquid frothing device, there may be no need to exchange parts or provide additional adjustment device(s), such as a liquid inlet valve, e.g. pinch valve, for controlling the temperature of the frothed liquid.

In some embodiments, the controlling the pump and/or valve operation(s) of the steam delivery assembly comprises controlling, based at least partly on the input, an amount and/or flow rate of the water supplied to the heater to generate the steam for frothing the liquid. This may represent a readily implementable way of adjusting the steam used for frothing the liquid.

For example, by the pump being controlled to displace a smaller quantity of water to the heater, the temperature of the steam leaving the heater may be higher due to more thermal energy being still available to heat the steam following vaporization of the water than in the scenario in which a larger quantity of water is displaced by the pump to the heater. Conversely, controlling the pump to displace more water to the heater may result in the steam having a lower temperature.

In some embodiments, the pump operation of the steam delivery assembly comprises discrete actuations of the pump that each cause displacement of the water to the heater. Such discrete actuations of the pump may, for example, be perceived by the user as audible and/or haptic "ticks" of the pump when performing the pump operation.

In such embodiments, the controlling the pump and/or valve operation(s) may comprise controlling, based at least partly on the input, an amount of water supplied to the heater during each of the actuations and/or a time period between consecutive actuations of the pump. Pumping more water during each of the actuations may result in the steam having a lower temperature, which may result in less heating of the liquid during frothing using the steam, and/or longer time period(s) between consecutive actuations may assist to restrict how much the liquid is heated by the steam.

The pump, e.g. vibration pump, may be drivable using an AC voltage signal, for example a mains AC voltage. Such a pump may be relatively straightforward and inexpensive to incorporate in the kitchen liquid frothing device, as well as having controllability benefits.

In such embodiments, the pump may be activatable at zero crossing points of the voltage signal, with the controlling the pump and/or valve operation(s) of the steam delivery assembly comprising selecting, based at least partly on the input, a control cycle comprising the zero crossing point(s) at which the pump is activated and the zero crossing points at which the pump is not activated.

Selecting such a control cycle may provide a readily implementable way of controlling the pump operation, e.g. so as to control an amount and/or flow rate of the water supplied to the heater.

In some embodiments, the method comprises selecting, based at least partly on the input, a number of the zero crossing point(s) in the control cycle at which the pump is activated and/or a period of the control cycle. It is noted that the period of the control cycle may mean the interval for the control cycle to repeat.

Increasing the number of zero crossing points in the control cycle in which the pump is activated may increase how much water is pumped by the pump to the heater. Increasing the period of the control cycle may mean that the pump pumps water to the heater less often. Thus, this control, which can be termed "multi cycle control", of the pump can control characteristic(s) of the steam provided by the steam delivery assembly and thus the temperature of the frothed liquid produced using the steam.

In more general terms, the controlling the pump and/or valve operation(s) of the steam delivery assembly may comprise controlling, based at least partly on the input, at least one characteristic of the steam provided by the steam delivery assembly. The nature of the steam, for example the temperature and/or pressure of the steam, may influence heat transfer to the liquid being frothed, and thus the temperature of the frothed liquid produced by the kitchen liquid frothing device.

In some embodiments, the method comprises controlling operation of the heater, as well as the pump and/or valve operation(s), at least partly based on the input, to adjust the steam for frothing the liquid. The method may thus, for example, comprise controlling the heater as well as the pump and/or valve(s), at least partly based on the input, to control the temperature of the frothed liquid produced by the kitchen liquid frothing device.

Since the temperature of the heater may partly determine the characteristics, such as temperature and pressure, of the steam, controlling the heater may provide a convenient way of exerting further control over the temperature of the frothed liquid produced by the kitchen liquid frothing device.

It is noted that in other embodiments the heater is not controlled based on the input indicative of a target temperature of a frothed liquid to be produced by the kitchen liquid frothing device.

This may simplify the frothed liquid temperature control. In embodiments in which the heater is included in a beverage machine's liquid dispenser, avoiding such control over the heater may beneficially assist to avoid disruption of temperature set points used for brewing the beverage and/or may minimize the risk that changing, in particular increasing, the temperature of the heater triggers a thermal cutout, e.g. thermal switch, included in the kitchen liquid frothing device.

In some embodiments, the receiving the input comprises receiving, from a user interface, a user input indicative of the target temperature of the frothed liquid to be produced by the kitchen liquid frothing device, with the controlling the pump and/or valve operation(s) of the steam delivery assembly being based at least partly on the user input.

The user interface can be of any suitable type. In some embodiments, the user interface comprises one or more buttons, a touchscreen and/or dial(s).

The user input may, for example, comprise a selected target temperature or temperature change of the liquid, e.g. milk, and/or may comprise a recipe selection, such as a selection of either a recipe for a hot beverage, for which a higher temperature froth recipe may be employed, or a recipe for a cold beverage, for which a lower temperature froth recipe may be employed.

The method according to any of the embodiments described herein may be a computer implemented method.

According to another aspect there is provided a computer program comprising computer program code which, when executed on a computing device having a controller, causes the controller to perform the method according to any of the embodiments described herein.

One or more non-transitory computer readable media may be provided, which non-transitory computer readable media have a computer program stored thereon, with the computer program comprising computer program code which is configured, when the computer program is run on a controller, to cause the controller to implement the method according to any of the embodiments described herein.

According to still another aspect there is provided a system for operating a steam delivery assembly of a kitchen liquid frothing device, the steam delivery assembly having a pump, optionally one or more valves, and a heater for heating water supplied thereto by the pump to provide steam for frothing a liquid, the system comprising a controller configured to: receive an input indicative of a target temperature of a frothed liquid to be produced by the kitchen liquid frothing device; and control pump and/or valve operation(s) of the steam delivery assembly at least partly based on the input to adjust the steam for frothing the liquid.

In some embodiments, the controller is configured to control, based at least partly on the input, an amount and/or flow rate of the water supplied to the heater to generate the steam for frothing the liquid.

In some embodiments, the pump operation of the steam delivery assembly comprises discrete actuations of the pump, with the controller being configured to control, based at least partly on the input, an amount of water supplied to the heater during each of the actuations and/or a time period between consecutive actuations of the pump.

In some embodiments, the pump is drivable using an AC voltage signal, and is activatable at zero crossing points of the AC voltage signal. In such embodiments, the controller may be configured to select, based at least partly on the input, a control cycle comprising the zero crossing point(s) at which the pump is activated and the zero crossing points at which the pump is not activated.

In some embodiments, the controller is configured to select, based at least partly on the input, a number of the zero crossing point(s) in the control cycle at which the pump is activated and/or a period of the control cycle.

Alternatively or additionally, the controller may be configured to control, based at least partly on the input, at least one characteristic of the steam provided by the steam delivery assembly. The at least one characteristic may comprise, for example, a temperature and/or a pressure of the steam.

Alternatively or additionally, the controller may be configured to control, based at least partly on the input, operation of the heater, as well as the pump and/or valve operation(s), to adjust the steam for frothing the liquid.

Alternatively or additionally, the controller may be configured to receive, from a user interface, a user input indicative of the target temperature of the frothed liquid to be produced by the kitchen liquid frothing device, and to control the pump and/or valve operation(s) of the steam delivery assembly at least partly based on the user input.

The user interface may, for example, be included in the system.

According to yet another aspect there is provided a kitchen liquid frothing device comprising: a steam delivery assembly having a pump and a heater for heating water supplied thereto by the pump to provide steam for frothing a liquid; and the system according to any one of the embodiments described herein.

According to a further aspect there is provided a beverage machine comprising: a liquid dispenser for dispensing liquid for preparing a beverage; and the kitchen liquid frothing device according to any of the embodiments described herein.

In some embodiments, the pump and/or the heater is/are included in the liquid dispenser as well as being included in the steam delivery assembly.

Alternatively or additionally, the beverage machine may comprise a coffee machine, such as a fully automatic coffee machine.

More generally, embodiments described herein in relation to the system may be applicable to the kitchen liquid frothing device, the beverage machine, the method and computer program, embodiments described herein in relation to the kitchen liquid frothing device may be applicable to the system, the beverage machine, the method and computer program, embodiments described herein in relation to the beverage machine may be applicable to the system, the kitchen liquid frothing device, the method and computer program, and embodiments described herein in relation to the method and computer program may be applicable to the system, the kitchen liquid frothing device and the beverage machine.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
FIG. 1 provides a block diagram of a beverage machine according to an example;
FIG. 2 provides a flowchart of a method according to an example;
FIG. 3 shows a voltage signal and zero crossing points at which a pump is activated, according to a first example; and
FIG. 4 shows a voltage signal and zero crossing points at which a pump is activated, according to a second example.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

Provided is a system for operating a steam delivery assembly of a kitchen liquid frothing device, e.g. milk frother. The steam delivery assembly has a pump and a heater for heating water supplied thereto by the pump to provide steam for frothing a liquid. The system comprises one or more processors configured to receive an input indicative of a target temperature of a frothed liquid to be produced by the kitchen liquid frothing device, and to control pump and/or valve operation(s) of the steam delivery assembly at least partly based on the input. Also provided is a kitchen liquid frothing device comprising the steam delivery assembly and the system. Additionally provided is a beverage machine, such as a coffee machine, comprising the kitchen liquid frothing device. Further provided is a method and related computer program for operating a steam delivery assembly of a kitchen liquid frothing device.

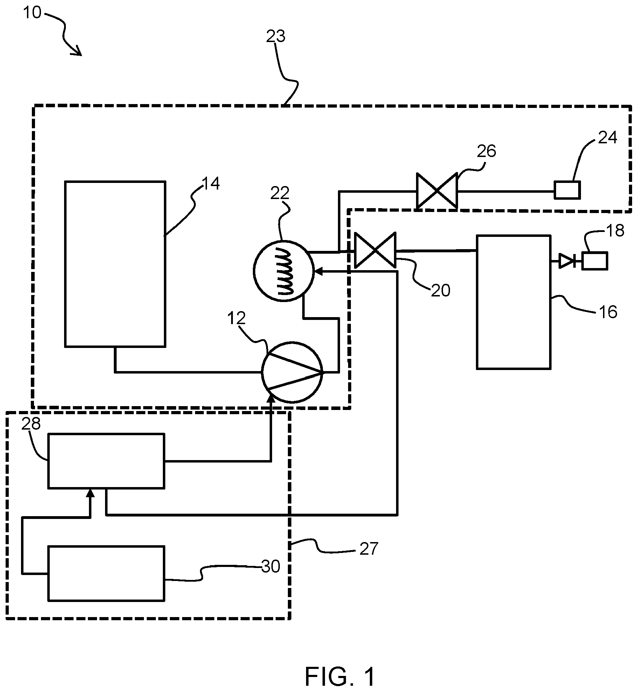

FIG. 1 provides a block diagram of a beverage machine 10 according to an example. The beverage machine 10 includes a liquid dispenser for dispensing liquid for preparing a beverage. To this end, the liquid dispenser may include a pump 12.

The pump 12 may have any suitable design. In some embodiments, the pump 12 is a vibration pump. The vibration pump comprises a pumping member and a solenoid (not visible). The solenoid is energizable, in other words activatable, to cause displacement of the pumping member. The pumping member may accordingly include a magnetic material, e.g. a ferromagnetic material.

The displacement of the pumping member, in turn, causes displacement of the liquid, e.g. water, for preparing the beverage. The vibration pump may include check valves that allow fluid displacement in only one direction.

The pumping member may have any suitable design provided that the pumping member is capable of displacing the liquid when the pumping member is caused to move by the solenoid. The pumping member may comprise, e.g. be defined by, a plunger or diaphragm.

The vibration pump may include a spring arranged to be compressed when the pumping member is caused to move by the solenoid. The present disclosure partly concerns controlling a pump operation of the vibration pump, as will be described in more detail herein below.

In at least some embodiments, such as shown in FIG. 1, the beverage machine 10 comprises a container 14 for containing liquid, and a beverage processing chamber 16. In such embodiments, the pump 12 may be arranged to displace the liquid from the container 14 to the beverage processing chamber 16.

A beverage delivery outlet 18 may be provided downstream of the beverage processing chamber 16 for allowing the beverage to exit the beverage machine 10.

The liquid may be displaced to the beverage processing chamber 16 via a first valve 20, e.g. a first electronic valve.

The beverage machine 10 may be used to prepare various different types of beverage, such as coffee, tea, milk, drinking chocolate, e.g. hot chocolate, etc.

Various different types of raw material may thus be added to the beverage processing chamber 16 for combining with the liquid, e.g. water, supplied thereto by the pump 12.

The raw material may be added to the beverage processing chamber 16 in various ways. In some embodiments, the raw material, e.g. ground coffee, may be supplied in a pre-portioned form, such as in a capsule, pod, pad or the like.

In some embodiments, such as shown in FIG. 1, the liquid dispenser of the beverage machine 10 comprises a heater 22, for example a thermoblock, for heating the liquid. In such embodiments, the pump 12 may be arranged to pump the liquid to the heater 22, for instance to heat the liquid as it passes towards the beverage processing chamber 16.

More generally, and irrespective of whether or not the heater 22 and the pump 12 are included in the beverage machine's 10 liquid dispenser, the heater 22 and the pump 12 are included in a steam delivery assembly 23 of a kitchen liquid frothing device, e.g. a milk frother.

In some embodiments, such as shown in FIG. 1, the kitchen liquid frothing device is included in the beverage machine 10 along with the liquid dispenser. In such embodiments, the pump 12 and/or the heater 22 that are included in the liquid dispenser may also, for example, be included in the kitchen liquid frothing device's steam delivery assembly 23.

In other words, the beverage machine 10 may make use of a single heater 22 to selectively supply hot liquid, e.g. hot water, of about 90°C to the beverage processing chamber 16, and steam of about 140°C (or more).

Alternatively, the beverage machine 10 may include a dedicated heater for generating steam in addition to the heater 22 that may be included in the liquid dispenser.

It is further noted that in some embodiments the kitchen liquid frothing device is a standalone device that is not included in a beverage machine 10 having a liquid dispenser.

In order to provide the steam for frothing the liquid, pump and/or valve operation(s) of the steam delivery assembly 23 may control supply of water to the heater 22 to generate steam and/or delivery of the steam to froth the liquid.

The kitchen liquid frothing device may include a steam outlet 24, e.g. comprising a steam nozzle, through which the steam is deliverable. In some embodiments, such as shown in FIG. 1, the steam passes to the steam outlet 24 via a steam valve 26.

The kitchen liquid frothing device may use the steam generated by the steam delivery assembly 23 in any suitable manner in order to froth the liquid, e.g. milk. In some embodiments, the kitchen liquid frothing device includes a steam channel that comprises a Venturi restriction. The steam channel may, in use, receive steam delivered via the steam outlet 24.

When the steam, e.g. steam jet, passes this restriction, a pressure drop may be generated directly downstream of the restriction. This pressure drop may be used to draw in liquid to be frothed, e.g. milk, and ambient air, with the liquid and air being subsequently entrained by the steam and mixed to form frothed liquid.

For example, the steam-liquid-air flow may then be guided through a mixing chamber, e.g. expansion chamber, where the liquid may be mixed with air to form froth.

Thus, a Venturi principle may be employed to froth the liquid, e.g. milk.

In some embodiments, the kitchen liquid frothing device comprises a steam wand with an air inlet. Such a steam wand can be termed a "panarello". In such embodiments, the steam channel is at least partly defined by a hollow bore of the steam wand.

The steam wand may be used by dipping an end of the steam wand into the liquid received in a container, e.g. carafe. The steam is then used to draw the liquid and ambient air, via the air inlet, into the steam wand, so that the liquid is frothed using the above-described Venturi principle. The liquid and air are mixed inside the steam wand, and the resulting frothed liquid is released into the container.

In alternative embodiments, the kitchen liquid frothing device includes a container for containing the milk, in other words a carafe, that can be clipped onto a frame or cover. The frame or cover may include the Venturi restriction, with the container being connected to the steam outlet 24 via the frame/cover.

In such embodiments, the kitchen liquid frothing device comprises a spout, e.g. a spout provided on the frame/cover, through which the frothed liquid is dispensable, e.g. into the user's cup.

In embodiments in which the kitchen liquid frothing device is included in the beverage machine 10, the spout may be arranged, in use, beneath a beverage dispensing spout of the beverage machine 10. In more general terms the spout and the beverage dispensing spout may be separate spouts, which are both arranged, e.g. extend, above a position for the user's cup that receives the frothed liquid from the spout and the beverage from the beverage dispensing spout.

It is noted that in embodiments in which the Venturi restriction is included in the frame/cover, all ducts that come into contact with the liquid, e.g. milk, may be arranged on a partition surface between the container and the frame. When the container and the frame are detached from each other, these ducts may become readily accessible for cleaning.

In other embodiments, the Venturi restriction may be arranged inside a beverage dispensing spout of the beverage machine 10. In such embodiments, the kitchen liquid frothing device may include a lateral inlet to which one end of a tube can be connected. The other end of the tube may or may not be provided with a lance or tube, e.g. metal tube, that can be dipped into a container containing the liquid, such as a milk carton or milk reservoir.

Such a kitchen liquid frothing device may operate according to the above-described Venturi principle. A steam jet from the steam delivery assembly 23 may be passed through the Venturi restriction to generate an underpressure that is used to draw in ambient air, and liquid from the container via the tube. The liquid and the air are mixed in a mixing chamber, e.g. expansion chamber, inside the kitchen liquid frothing device to form frothed liquid. The frothed liquid is dispensed via the spout arranged inside the beverage dispensing spout.

After use, the tube, e.g. the tube provided with the lance, may be cleaned via hot water and/or steam used to clean the beverage dispensing spout, and/or the tube may be detachable from the beverage machine 10 to facilitate cleaning.

Due to the hot steam, the frothed liquid may be heated during frothing. Thus, in conventional kitchen liquid frothing devices, e.g. milk frothers, that use steam to froth the liquid, the steam may serve three purposes: (i) drawing in the liquid to be frothed and air; (ii) mixing the liquid and air; and (iii) heating the mixture.

Frothed liquid that has also been heated may be acceptable for inclusion in certain beverages, for example beverages prepared using heated water, such as hot coffee brewed at around 90°C. However, frothed liquid that has also been heated may be less desirable for other beverages, such as "cold brew" coffee, in other words coffee brewed at room temperature, and "brew over ice" or "iced" coffee, in which coffee is initially brewed at slightly lower temperatures than usual, e.g. 60 to 80°C instead of around 90°C, and then poured over ice to chill the coffee. It is noted that such coffee may be brewed slightly stronger than normal, to compensate for the inevitable dilution with water from melting of the ice.

In the case of, for example, "brew over ice" or "iced" coffee, it may be particularly desirable that the frothed liquid is less hot, so that when the frothed liquid, e.g. milk froth, is poured oved the ice, melting of the ice, and concomitant dilution of the beverage, may be slower.

One way of making colder frothed liquid may be to increase a diameter of a liquid suction duct or liquid inlet so that liquid can be drawn in at a higher flow rate. Due to the higher flow rate, the time during which heat is transferred from the steam to the liquid may be shorter, hence less heat may be transferred from the steam to the liquid, resulting in frothed liquid that is less hot.

It is also noted that since milk is normally taken from the refrigerator and therefore will be relatively cold, a higher proportion of milk in the milk-steam-air mixture may automatically cause the overall temperature of the mixture to drop.

It is further noted that some additional dimensional changes may be needed, e.g. to the air inlet and/or the Venturi restriction to counteract the decrease in froth ratio/ froth stability when increasing the liquid, e.g. milk, inflow. For instance, a cross-sectional area of the air inlet may be increased, which may assist to create more foam.

A disadvantage of this solution is that different kitchen liquid frothing devices, or at least different liquid frothing parts, may be needed for producing frothed liquids having different temperatures relative to each other. For example, differently dimensioned liquid suction ducts, air inlets and/or Venturi geometry may be needed. Such parts may need to be interchanged by a user, depending, for example, on whether "normal" hot froth or colder froth is desired.

More generally, it would be desirable to provide a physically simple way of operating the kitchen liquid frothing device, and in particular controlling temperature of the frothed liquid produced by the kitchen liquid frothing device, in which number of parts is kept to a minimum and/or ease of use is enhanced.

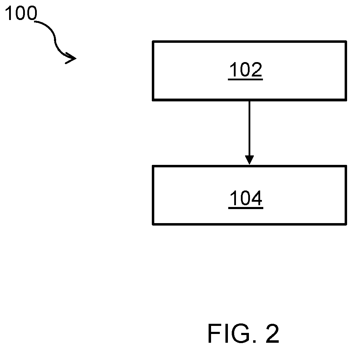

Referring to FIGs. 1 and 2, the present disclosure accordingly provides a system 27 and method 100 for operating the steam delivery assembly 23 of the kitchen liquid frothing device. The system 27 comprises a controller 28 configured to receive 102 an input indicative of a target temperature of a frothed liquid to be produced by the kitchen liquid frothing device, and to control 104 the pump and/or valve operation(s) of the steam delivery assembly 23, at least partly based on the input, to control delivery and/or characteristic(s) of steam for frothing the liquid.

Thus, the control over a temperature of the frothed liquid produced by the kitchen liquid frothing device may be exerted by controlling the steam delivery assembly's 23 pump and/or valve operation(s). Since the pump 12, as well as valve(s), may be already included in the steam delivery assembly 23 of the kitchen liquid frothing device, there may be no need to exchange parts or provide additional adjustment device(s), such as a liquid inlet valve, e.g. pinch valve, for controlling the temperature of the frothed liquid.

In some embodiments, the controller 28 is configured to control 104, based at least partly on the input, at least one characteristic of the steam provided by the steam delivery assembly 23. The nature of the steam, for example the temperature and/or pressure of the steam, may influence heat transfer to the liquid being frothed, and thus the temperature of the frothed liquid produced by the kitchen liquid frothing device. Moreover, the manner, e.g. flow rate, duration of water displacement, etc., in which liquid is supplied to the heater 22 can at least partly determine such characteristics of the steam.

For example, by the pump 12 being controlled to displace a smaller quantity of water to the heater 22, the temperature of the steam leaving the heater 22, e.g. thermoblock, may be higher due to more thermal energy being still available to heat the steam following vaporization of the water than in the scenario in which a larger quantity of water is displaced by the pump 12 to the heater 22. Conversely, controlling 104 the pump 12 to displace more water to the heater 22 may result in the steam having a lower temperature.

The controller 28 may be configured to control 104, based at least partly on the input, an amount and/or flow rate of the water supplied to the heater 22 to generate the steam used to froth the liquid. The method 100 may equivalently comprise controlling 104, at least partly based on the input, an amount and/or flow rate of the water supplied to the heater 22 to generate the steam for frothing the liquid.

In some embodiments, the pump operation implemented by the pump 12, e.g. the vibration pump, comprises discrete actuations of the pump 12 that each cause displacement of the water to the heater 12. Such discrete actuations may, for example, be perceived by the user as audible and/or haptic "ticks" of the pump 12 when performing the pump operation.

In such embodiments, the controller 28 may be configured to control 104, based at least partly on the input, an amount of water supplied to the heater 22 during each of the actuations and/or a time period between consecutive actuations of the pump 12. Pumping more water during each of the actuations may result in the steam having a lower temperature, which may result in less heating of the liquid during frothing using the steam, and/or longer time period(s) between consecutive actuations may assist to restrict how much the liquid is heated by the steam.

The pump 12, e.g. vibration pump, may be drivable using an AC voltage signal, for example a mains AC voltage. Such a pump 12 may be relatively straightforward and inexpensive to incorporate in the kitchen liquid frothing device, as well as having controllability benefits.

In such embodiments, the pump 12 may be activatable at zero crossing points of the voltage signal, with the controller being configured to select, based at least partly on the input, a control cycle comprising the zero crossing point(s) at which the pump is activated and the zero crossing points at which the pump is not activated.

Selecting such a control cycle may provide a readily implementable way of controlling 104 the pump operation, e.g. so as to control an amount and/or flow rate of the water supplied to the heater 22.

In some embodiments, the controller 28 is configured to select, based at least partly on the input, a number of the zero crossing point(s) in the control cycle at which the pump 12 is activated and/or a period of the control cycle. It is noted that the period of the control cycle may mean the interval for the control cycle to repeat.

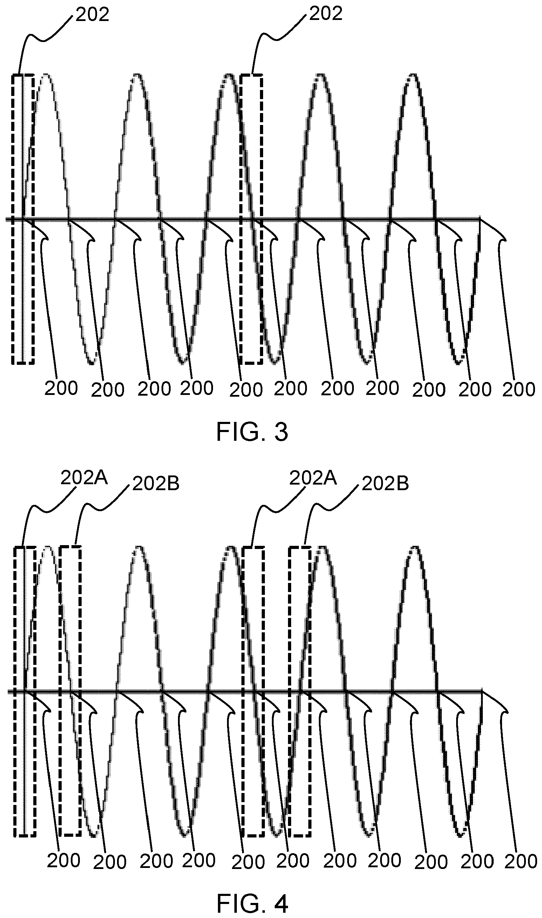

For illustration, FIGs. 3 and 4 show AC voltage signals comprising zero crossing points 200. The boxes 202 and 202A, 202B denote the zero crossing points at which the pump 12 is activated/energized. In the non-limiting example shown in FIG. 3, the pump 12 is activated once per five zero crossing points, whereas in the non-limiting example shown in FIG. 4, the pump 12 is activated twice per five zero crossing points.

Increasing the number of zero crossing points in the control cycle in which the pump 12 is activated may increase how much water is pumped by the pump 12 to the heater 22. Increasing the period of the control cycle may mean that the pump 12 pumps water to the heater 22 less often. Thus, this control, which can be termed "multi cycle control", of the pump 12 can control characteristic(s) of the steam provided by the steam delivery assembly 23 and thus the temperature of the frothed liquid produced using the steam.

In some embodiments, the steam delivery assembly 23 is configured so that the pump operation comprises an initial pumping step in which the pump 12 supplies water to the heater 22 but steam generated in the initial pumping step pressurizes the steam delivery assembly 23, and thus may not be immediately delivered to froth the liquid. This initial pumping step may be regarded as a "preload" step.

In such embodiments, the steam delivery assembly 23 may be configured so that the pump operation further comprises a main pumping step, which follows the initial pumping step, in which main pumping step the pump 12 supplies water to the heater 22 and the thus generated steam is immediately delivered to froth the liquid.

The controller 28 may be configured to, at least partly based on the input, control one or both of the initial pumping step and the main pumping step to adjust the steam for frothing the liquid, e.g. and thereby control the temperature of a frothed liquid produced by the kitchen liquid frothing device.

As an illustrative non-limiting example of how the pump operation can be controlled to change a temperature of the frothed liquid produced by the kitchen liquid frothing device, Table 1 shows adjustment of the pump operation to change the temperature of the frothed liquid, in this case milk froth.

**Table 1**

| Steam delivery assembly control parameters | Lower temperature froth recipe | Higher temperature froth recipe |
|---|---|---|
| Number of zero crossing points in the control cycle at which the pump 12 is activated in the initial pumping step | 4 | 2 |
| Period of the control cycle in initial pumping step / number of zero crossing points | 104 | 40 |
| Number of zero crossing points in the control cycle at which the pump 12 is activated in the main pumping step | 24 | 2 |
| Period of the control cycle in main pumping step / number of zero crossing points | 255 | 35 |
| Duration of initial pumping step/seconds | 9 | 7 |
| Temperature set point of heater 22 in initial pumping step/°C | 135 | 135 |
| Temperature set point of heater 22 in main pumping step/°C | 150 | 150 |

A temperature increase of the milk was measured, by immersing a temperature probe in the milk, before and after frothing using the parameters set out in Table 1. It is noted that the milk is usually at refrigerator temperature, about 4°C, before frothing. The temperature increase measured for the lower temperature milk froth recipe was about 1.5°C less than for the higher temperature milk froth recipe.

In this respect, increasing the number of zero crossing points at which the pump 12 is activated, e.g. from 2 to 4 in the initial pumping step and from 2 to 24 in the main pumping step, may mean that the pump 12 is controlled for longer, and hence more water may be pumped to the heater 22. This may, for example, have the consequence that the steam has a lower temperature, as previously described.

Alternatively or additionally, by making the period longer, e.g. about 2.5 times longer in the initial pumping step and about 7.5 times longer in the main pumping step, the water may be pumped less often, hence restricting how much the liquid is heated by the steam, as also described above.

This non-limiting example illustrates how controlling the pump operation can be used to control the temperature of the frothed liquid produced by the kitchen liquid frothing device.

As an alternative or in addition to the controlling of the pump 12, valve(s), e.g. valve(s) for controlling transport of water to the heater 22 and/or steam valve(s) 26 for controlling transport of steam downstream of the heater 22, may be controlled, at least partly based on the input, to adjust the steam for frothing the liquid.

For example, controlling the valve(s) may enable delivery and/or characteristic(s) of the steam for frothing the liquid to be controlled.

Such valve(s) may be regarded as being included in a liquid frothing line of the kitchen liquid frothing device, e.g. of the kitchen liquid frothing device included in the beverage machine 10.

It is noted at this point that in some embodiments the controller 28 is configured to control the heater 22 as well as the pump 12 and/or valve(s), at least partly based on the input, to control the temperature of the frothed liquid produced by the kitchen liquid frothing device. The method 100 may equivalently comprise controlling the heater 22 as well as the pump 12 and/or valve(s), at least partly based on the input, to control the temperature of the frothed liquid produced by the kitchen liquid frothing device.

Since the temperature of the heater 22 may also partly determine the characteristics, such as temperature and pressure, of the steam, controlling the heater 22, e.g. the temperature of the thermoblock, may provide a convenient way of exerting further control over the temperature of the frothed liquid produced by the kitchen liquid frothing device.

As an illustrative non-limiting example of how the pump operation, as well as heating provided by the heater 22, can be controlled to change a temperature of the frothed liquid produced by the kitchen liquid frothing device, Table 2 shows adjustment of the pump operation and the heater 22 set temperature to change the temperature of the frothed liquid, in this case milk froth produced from 60 g of milk.

**Table 2**

| Steam delivery assembly control parameters | Lower temperature froth recipe | Higher temperature froth recipe |
|---|---|---|
| Number of zero crossing points in the control cycle at which the pump 12 is activated in the initial pumping step | 4 | 2 |
| Period of the control cycle in initial pumping step / number of zero crossing points | 104 | 40 |
| Number of zero crossing points in the control cycle at which the pump 12 is activated in the main pumping step | 4 | 2 |
| Period of the control cycle in main pumping step / number of zero crossing points | 100 | 35 |
| Duration of initial pumping step/seconds | 9 | 7 |
| Temperature set point of heater 22 in initial pumping step/°C | 158 | 137 |
| Temperature set point of heater 22 in main pumping step/°C | 150 | 150 |
| Change in temperature of the liquid during frothing/ °C | 46.7 | 48.0 |
| Froth Volume/Total volume of the frothed liquid * 100 | 57.9 | 59.3 |

In this non-limiting example, the set temperature of the heater 22 was increased during the initial pumping step, the duration of the initial pumping step was increased, the number of zero crossing points in the control cycle in which the pump 12 is activated was increased, and the period of the control cycle was increased in the lower temperature froth recipe compared to in the higher temperature froth recipe. It can be seen from the second to bottom row of Table 2 that the increase in temperature of the liquid during frothing in the case of the lower milk temperature recipe was suppressed.

More generally, a change in temperature of the frothed liquid when a lower temperature froth recipe is employed, via the controller's 28 control over the pump and/or valve operation(s), and optionally the heater 12, may be 1 to 5°C less than a change in temperature of the frothed liquid when the higher temperature froth recipe is employed.

Whilst this difference in the change in temperature may seem relatively modest, it can nonetheless be beneficial, particularly for "brew over ice" or "iced" beverages. This is because the lower the initial temperature of the beverage including the frothed liquid, the slower the ice may melt and dilute the beverage.

It is noted that in some embodiments the heater 22 is not controlled based on the input indicative of a target temperature of a frothed liquid to be produced by the kitchen liquid frothing device. This may simplify the frothed liquid temperature control. In embodiments in which the heater 22 is included in the beverage machine's 10 liquid dispenser, avoiding such control over the heater 22 may beneficially assist to avoid disruption of temperature set points used for brewing the beverage and/or may minimize the risk that changing, in particular increasing, the temperature of the heater 22 triggers a thermal cutout, e.g. thermal switch, included in the kitchen liquid frothing device.

In some embodiments, and referring again to FIG. 1, the controller 28 is configured to receive 102, from a user interface 30, a user input indicative of the target temperature of the frothed liquid to be produced by the kitchen liquid frothing device, and to control 104 the pump and/or valve operation(s) of the steam delivery assembly 23 at least partly based on the user input.

In some embodiments, such as shown in FIG. 1, the user interface 30 is included in the system 27.

The user interface 30 can be of any suitable type. In some embodiments, the user interface 30 comprises one or more buttons, a touchscreen and/or dial(s).

The user input may, for example, comprise a selected target temperature or temperature change of the liquid, e.g. milk, and/or may comprise a recipe selection, such as a selection of either a recipe for a hot beverage, for which a higher temperature froth recipe may be employed, or a recipe for a cold beverage, for which a lower temperature froth recipe may be employed.

In a non-limiting example, the user may press a button to get a colder froth recipe without the need to change any hardware of the kitchen liquid frothing device. In such an example, software may adapt the steam settings to cause the colder froth to be provided.

Control over the pump 12 and/or valve(s), and optionally other components of the steam delivery assembly 23, described herein may enable adjustment of other properties of the frothed liquid, such as milk bubble size and bubble distribution in the frothed liquid.

It is noted that FIG. 2 provides a flowchart of the method 100 for operating a steam delivery assembly 23 of a kitchen liquid frothing device, for example a kitchen liquid frothing device as described above with reference to FIG. 1, with the steam delivery assembly 23 having a pump 12 and a heater 22 for heating water supplied thereto by pump and/or valve operation(s) of the steam delivery assembly 23 to adjust steam for frothing a liquid.

The method 100 comprises receiving 102 an input indicative of a target temperature of a frothed liquid to be produced by the kitchen liquid frothing device, and controlling 104 the pump and/or valve operation(s) of the steam delivery assembly 23, at least partly based on the input, to adjust, e.g. to control delivery and/or characteristic(s) of, steam for frothing the liquid.

Adjusting steam for frothing the liquid may enable adjustment of a temperature of a frothed liquid produced by the kitchen liquid frothing device, as previously described.

The method 100 may be performed using the controller 28 of the system described above.

Further provided is a computer program comprising computer program code which is configured, when the computer program is run on a controller 28, to cause the controller 28 to implement the method 100 according to any of the embodiments described herein.

The present disclosure accordingly contemplates use of software only, to bring about a change in the temperature of the frothed liquid, e.g. a milk froth temperature. Hardware changes may therefore not be required.

In particular, the software may be employed to adjust steam characteristic(s), for example by using a control algorithm to adjust the pump and/or valve operation(s) of the steam delivery assembly 23.

As discussed above, embodiments make use of a controller 28. The controller 28 can be implemented in numerous ways, with software and/or hardware, to perform the various functions required. A processor is one example of a controller 28 which employs one or more microprocessors that may be programmed using software (e.g., microcode) to perform the required functions. A controller 28 may however be implemented with or without employing a processor, and also may be implemented as a combination of dedicated hardware to perform some functions and a processor (e.g., one or more programmed microprocessors and associated circuitry) to perform other functions.

Examples of controller 28 components that may be employed in various embodiments of the present disclosure include, but are not limited to, conventional microprocessors, application specific integrated circuits (ASICs), and field-programmable gate arrays (FPGAs).

In various implementations, a processor or controller 28 may be associated with one or more storage media such as volatile and non-volatile computer memory such as RAM, PROM, EPROM, and EEPROM. The storage media may be encoded with one or more programs that, when executed on one or more processors and/or controllers 28, perform the required functions. Various storage media may be fixed within a processor or controller 28 or may be transportable, such that the one or more programs stored thereon can be loaded into a processor or controller 28.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

Functions implemented by a controller 28 or processor may be implemented by a single processor or by multiple separate processing units which may together be considered to constitute a "controller" or "processor". Such processing units may in some cases be remote from each other and communicate with each other in a wired or wireless manner.

The mere fact that certain measures are recited in mutually different dependent claims does not indicate that a combination of these measures cannot be used to advantage.

A computer program may be stored/distributed on a suitable medium, such as an optical storage medium or a solid-state medium supplied together with or as part of other hardware, but may also be distributed in other forms, such as via the Internet or other wired or wireless telecommunication systems.

If the term "adapted to" is used in the claims or description, it is noted the term "adapted to" is intended to be equivalent to the term "configured to". If the term "arrangement" is used in the claims or description, it is noted the term "arrangement" is intended to be equivalent to the term "system", and vice versa.

Any reference signs in the claims should not be construed as limiting the scope.

## Claims

1. A method (100) for operating a steam delivery assembly (23) of a kitchen liquid frothing device, the steam delivery assembly having a pump (12), optionally one or more valves (26), and a heater (22) for heating water supplied thereto by the pump to provide steam for frothing a liquid, the method comprising:
receiving (102) an input indicative of a target temperature of a frothed liquid to be produced by the kitchen liquid frothing device; and
controlling (104) pump and/or valve operation(s) of the steam delivery assembly, at least partly based on the input, to adjust the steam for frothing the liquid.

2. The method (100) according to claim 1, wherein the controlling (104) the pump and/or valve operation(s) of the steam delivery assembly (23) comprises controlling, based at least partly on the input, an amount and/or flow rate of the water supplied to the heater (22) to generate the steam for frothing the liquid.

3. The method (100) according to claim 1 or claim 2, wherein the pump operation of the steam delivery assembly (23) comprises discrete actuations of the pump (12), the controlling (104) the pump and/or valve operation(s) of the steam delivery assembly comprising controlling, based at least partly on the input, an amount of water supplied to the heater (22) during each of the actuations and/or a time period between consecutive actuations of the pump.

4. The method (100) according to any one of claims 1 to 3, wherein the pump (12) is drivable using an AC voltage signal, and is activatable at zero crossing points of the AC voltage signal, the controlling (104) the pump and/or valve operation(s) of the steam delivery assembly (23) comprising selecting, based at least partly on the input, a control cycle comprising the zero crossing point(s) at which the pump is activated and the zero crossing points at which the pump is not activated.

5. The method (100) according to claim 4, wherein the controlling (104) the pump and/or valve operation(s) of the steam delivery assembly (23) comprises selecting, based at least partly on the input, a number of the zero crossing point(s) in the control cycle at which the pump (12) is activated and/or a period of the control cycle.

6. The method (100) according to any one of claims 1 to 5, wherein the controlling (104) the pump and/or valve operation(s) of the steam delivery assembly (23) comprises controlling, based at least partly on the input, at least one characteristic of the steam provided by the steam delivery assembly (23); optionally wherein the at least one characteristic comprises a temperature and/or a pressure of the steam.

7. The method (100) according to any one of claims 1 to 6, wherein the receiving (102) the input comprises receiving, from a user interface (30), a user input indicative of the target temperature of the frothed liquid to be produced by the kitchen liquid frothing device, the controlling (104) the pump and/or valve operation(s) of the steam delivery assembly (23) being based at least partly on the user input.

8. The method (100) according to any one of claims 1 to 7, comprising controlling operation of the heater (22), as well as the pump (12) and/or valve operation(s), at least partly based on the input, to adjust the steam for frothing the liquid.

9. A computer program comprising computer program code which, when executed on a computing device having a controller (28), causes the controller to perform the method (100) according to any one of claims 1 to 8.

10. A system (27) for operating a steam delivery assembly (23) of a kitchen liquid frothing device, the steam delivery assembly having a pump (12), optionally one or more valves (26), and a heater (22) for heating water supplied thereto by the pump to provide steam for frothing a liquid, the system comprising a controller (28) configured to:
receive an input indicative of a target temperature of a frothed liquid to be produced by the kitchen liquid frothing device; and
control pump and/or valve operation(s) of the steam delivery assembly at least partly based on the input to adjust the steam for frothing the liquid.

11. The system (27) according to claim 10, wherein the controller (28) is configured to control, based at least partly on the input, an amount and/or flow rate of the water supplied to the heater (22) to generate the steam for frothing the liquid and/or wherein the controller (28) is configured to control, based at least partly on the input, operation of the heater (22), as well as the pump and/or valve operation(s), to adjust the steam for frothing the liquid.

12. The system (27) according to claim 10 or claim 11, wherein the pump operation of the steam delivery assembly (23) comprises discrete actuations of the pump (12), the controller (28) being configured to control, based at least partly on the input, an amount of water supplied to the heater (22) during each of the actuations and/or a time period between consecutive actuations of the pump.

13. The system (27) according to any one of claims 10 to 12, wherein the pump (12) is drivable using an AC voltage signal, and is activatable at zero crossing points of the AC voltage signal, the controller (28) being configured to select, based at least partly on the input, a control cycle comprising the zero crossing point(s) at which the pump is activated and the zero crossing points at which the pump is not activated; optionally wherein the controller is configured to select, based at least partly on the input, a number of the zero crossing point(s) in the control cycle at which the pump is activated and/or a period of the control cycle.

14. A kitchen liquid frothing device comprising:
a steam delivery assembly (23) having a pump (12), optionally one or more valves (26), and a heater (22) for heating water supplied thereto by the pump to provide steam for frothing a liquid; and
the system (27) according to any one of claims 10 to 13.

15. A beverage machine (10) comprising:
a liquid dispenser for dispensing liquid for preparing a beverage; and
the kitchen liquid frothing device according to claim 14; optionally wherein the pump (12) and/or the heater (22) is/are included in the liquid dispenser as well as being included in the steam delivery assembly (23).
